# EUROPEAN PATENT SPECIFICATION

(11) **EP 0 568 237 B1**
(45) Date of publication and mention of the grant of the patent: **23.01.2002**
(21) Application number: 93303022.3
(22) Date of filing: 20.04.1993
(51) Int. Cl.: G06F 1/32

(54) **Voltage-controlled apparatus for battery-powered electronic devices**
Spannungsgesteuerte Einrichtung für batteriebetriebene elektronischen Geräte
Dispositif commandé par tension pour des appareils électroniques alimentés par batterie

(30) Priority: 28.04.1992 US 874935
(43) Date of publication of application: 03.11.1993
(73) Proprietor: AT&T Corp., New York, NY 10013-2412 (US)
(72) Inventor: McNair, Bruce E., Holmdel, New Jersey 07733 (US)
(74) Representative: Buckley, Christopher Simon Thirsk

(56) References cited:
- EP-A- 0 012 232
- EP-A- 0 407 270
- WO-A-91/00564
- MOTOROLA TECHNICAL DEVELOPMENTS vol. 10, March 1990, SCHAUMBURG, ILLINOIS US page 69 BABCOCK M. H. 'INTEGRATED CIRCUIT HAVING ELEMENTS TO SELECT CLOCK SOURCE'

## Description

This invention relates to electronic devices adapted to be powered by a variable voltage source.

Development of processor-driven, battery-powered devices has benefited from advances in many technologies. Among those technological advances is the decreasing power consumption of integrated circuits, such as Complementary Metal Oxide Semiconductors (CMOS). Equally important are the strides made in portable power supply technology, which have given birth to batteries capable of delivering relatively constant voltage output for most of the useful life (or charge cycle) of a battery. As used herein, the term relatively constant voltage refers to voltage of a battery which has a monotonically decreasing function over time which is such that the percentage of change in valtage over any short period of time is negligible.

For portable devices, two types of batteries with different discharging patterns are commonly used, namely zinc carbon-based batteries which have a gradual discharge characteristic, and nickel cadmium-based batteries known for their relatively stable output voltage followed by a rapid decrease in voltage level as they approach the energy depletion stage.

The relatively constant voltage attribute of these batteries is one of the main reasons for their widespread use in prior art portable devices which typically include a significant number of circuits that require a constant voltage input to be functional. Because of this requirement, when a gradually discharged battery reaches a voltage level lower than the voltage input required by those circuits, the latter become inoperative, notwithstanding the fact that a substantial amount of energy may be left in the battery. However, the gradually discharging battery offers the distinct advantage that an extended warning of battery failure can be provided. The warning which can be generated, for example, by a voltage sensor in the device, typically indicates to the user that the battery should be replaced or operations currently being performed should be brought to an end quickly to avoid catastrophic results attributable to power failure, such as loss of data on a portable personal computer. By contrast, for rapidly discharging batteries, more efficient use of battery energy is achieved because the voltage level drops off near energy depletion. However, the user of a portable device powered by those batteries is given a limited time window between the warning of imminent battery failure and the occurrence of such failure.

EP-A-0 407 270 relates to a circuit for decreasing a single, global clock frequency of an integrated circuit when the power supply voltage level drops below a predetermined threshold. A threshold detector detects the voltage drop, with the threshold set close to the level at which normal frequency operation of the integrated circuit is no longer guaranteed. The frequency is decreased by means of a voltage divider or by means of a register controlling one or more parameters of the oscillator of the global timing source.

According to this invention there is provided an electronic device as claimed in claim 1.

The present invention takes advantage of the fact that most clock-driven, e.g. most processor-based, battery-powered portable devices extensively use a type of integrated circuit (IC), such as CMOS-based IC, which consumes power to any significant extent only when one of the outputs or internal states change. In accordance with the invention, the circuitry runs at full speed when the battery is fresh or fully charged. However, as the voltage decreases due to battery discharge, the frequency of the internal or system clock of the circuitry is proportionately reduced. The decreased power consumption of the processor due to the reduced frequency of the system clock permits continued operations therein, albeit at a slower pace, for a significantly longer time period than would be the case in the prior art. Thus, as the battery voltage decreases, a graceful degradation of the device capabilities is set in motion.

In a preferred embodiment of the invention, electronic components included in the device are divided into two groups, namely a) components that can operate at variable speed and constant or variable voltage, and b) components requiring constant voltage and constant speed to be functional. For the first group of components, the voltage output of the battery is fed into a variable speed timing source, such as a voltage-controlled oscillator, whose clock rate is proportional to the battery voltage. Thus, as the battery discharges and its voltage decreases, the clock rate of the timing source is proportionately reduced in a predetermined manner. The timing source is electrically connected to the variable speed components to allow the oscillator frequency to dictate the clock rate of those components. For a CMOS-based processor, for example, the controlled frequency from the variable speed timing source causes the speed of the processor to be reduced in a predictable manner. Thus, as the frequency of the timing source decreases due to lower battery voltage, the processor speed is proportionately reduced, causing reduced power consumption and slower but continued operations of the device.

In a feature of the invention, functions which may be associated with the second group of components and for which it is not possible or desirable to operate at reduced system clock speed, are terminated as voltage is reduced. This termination function may be invoked, for example, in response to a monitoring signal indicative of reduced battery voltage or system clock frequency below a predetermined threshold. Another feature of the invention is to allow power management functions, such as cycling power on and off, to be activated for fixed voltage components in response to reduced power voltage from the battery.

### Brief Description of the Drawing

In the drawing:
FIG. 1 illustrates a circuit arrangement for a battery-powered electronic device comprised of a) components requiring a constant voltage level, but capable of operating at variable speed, and b) components requiring constant voltage and operating at constant speed;
FIG. 2 illustrates a circuit arrangement for a battery-powered electronic device comprised of a) variable voltage components operating at variable speed, and b) components requiring constant voltage and operating at constant speed;
FIG. 3 illustrates an exemplary variable speed timing source arranged in accordance with the invention to output proportionately lower frequency in response to reduced battery voltage;
FIG. 4 illustrates an alternative arrangement for a variable speed timing source; and
FIG. 5 is a graph representing the output of a variable timing source as a function of voltage.

### Detailed Description

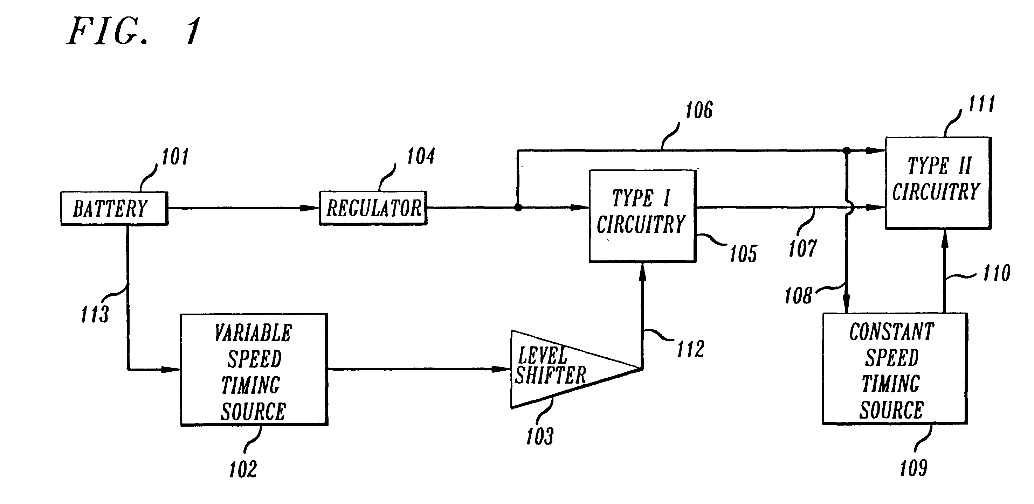

FIG. 1 shows different components of a circuit for a battery-powered electronic device. In FIG. 1, power to the circuit is provided by battery 101, which may be, for example, a zinc carbon-based battery or nickel cadmium-based battery. When fully charged, battery 101 has the distinct attribute of delivering relatively constant output to the components of the circuit. The output of battery 101 is fed into variable speed timing source 102, which provides to type I circuitry 105 via level shifter 103 a square wave signal of varying frequency proportional to the battery voltage. Variable speed timing source 102 may be implemented using, for example, a voltage-controlled oscillator. Exemplary arrangements for variable speed timing source 102 are described below. Level shifter 103 reconciles operating voltage level differences between type I circuitry 105 and variable speed timing source 102. Level shifter 103 can be designed using, for example, a discrete component, such as an RCA CMOS inverter 4069. Connected to level shifter 103 is type I circuitry 105. The latter is comprised of one or a plurality of components characterized by a) an inability to tolerate variations in voltage level, b) an ability to operate at various speeds, and c) the consumption of power to any significant extent only when one of their outputs or internal states change. Type I circuitry 105 may be implemented using, for example, CMOS-based discrete logic components with fixed voltage level requirement. Because of the fixed voltage level requirement of the components of type I circuitry 105, minor voltage deviations from battery 101 relatively constant output are adjusted by regulator 104 to the voltage level required by these components. These minor deviations may be caused, for example, by load conditions, changes in temperature or depletion of the capacity of battery 101. Regulator 104 is arranged to adjust only voltage levels higher than the output required by the fixed voltage components. Thus, voltage levels lower than the desired output level traverse regulator 104 unadjusted. Regulator 104 may be implemented using, for example, a 78XX series regulator from National Semiconductor Corporation.

In FIG. 1, the clock speed of type I circuitry 105 is dictated by the frequency output of variable speed timing source 102, which forwards timing signals to type I circuitry 105 via level shifter 103 and timing bus 112. Thus, the clock speed of type I circuitry 105 is a decreasing function of the frequency provided by variable speed timing source 102. As battery 101 discharges and its voltage decreases, the resulting reduced frequency of variable speed timing source 102 decreases the speed at which the components of type I circuitry 105 operate. The slower speed of those components allows reduced power consumption and, therefore, prolongation of the life of battery 101 by taking advantage of the inherent characteristics of those components to consume power to any significant extent only when changes occur in their output or in their internal states. Memory and Central Processing Unit (CPU) for a "laptop" personal computer represent electronic components that may illustratively use type I circuitry 105.

In contrast to type I circuitry 105, type II circuitry 111 requires, in addition to relatively constant voltage, constant speed. Power bus 106 carries constant voltage from regulator 104 to type II circuitry 111. The operational speed of type II circuitry 111 is controlled by constant speed timing source 109, which is an oscillator providing fixed frequency to type II circuitry 111 via timing signal bus 110. Type I circuitry 105 communicates with type II circuitry 111 via signal path 107. Types of signals exchanged between these two classes of circuitry include commands to cycle power on and off in response to slower operational speed of type I circuitry 105 indicative of lower battery voltage. For example, in a "laptop" personal computer, lower battery voltage may cause a command to be initiated by a processor (type I circuitry) instructing the hard disk (type II circuitry) to turn power on and spin only during disk access and update functions (read and write operations). When data is not being accessed on the hard disk, power is automatically turned off. This power cycling technique permits reduced power consumption for some components of type II circuitry 111 when the battery voltage decreases. Alternatively, non-essential functions or components associated with type II circuitry may be shut off or terminated when battery 101 voltage reaches a predetermined threshold.

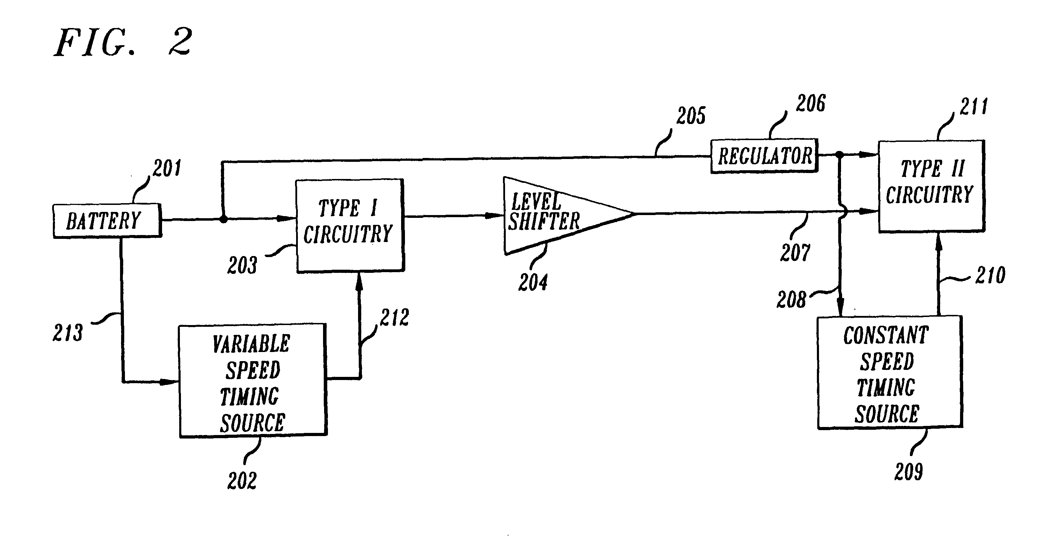

FIG. 2 illustrates a circuit arrangement comprised of a) variable voltage components operating at variable speed, and b) components requiring constant voltage and operating at constant speed. FIG. 2 differs from FIG. 1 in the layout of the circuit and the characteristics of type I circuitry 203. Battery 201, level shifter 204, regulator 206, type II circuitry 211, variable speed timing source 202 and constant speed timing source 209 are identical to their counterparts in FIG. 1. In FIG. 2, regulator 206 adjusts deviations from the relatively constant output of battery 201 (received via power bus 205) only for type II circuitry 211 and constant speed timing source 209. The energy output of battery 201 is fed directly to type I circuitry 203 and variable speed timing source 202 without any voltage correction from regulator 206. Type I circuitry 203 thus differs from type I circuitry 105 of FIG. 1 primarily in its ability to operate under variable voltage conditions. Hence, as the battery discharges and its voltage decreases, variable speed timing source 202 and type I circuitry 203 receive whatever voltage output battery 201 can provide.

The operational speed of type I circuitry 203 is dictated by the frequency signals received from variable speed timing source 202. Since the frequency output by variable timing source 202 is proportional to the voltage of battery 201, as described above, power consumption is minimized in type I circuitry 203 because of the reduced clock rate and lower voltage as battery 201 voltage decreases. The invention also contemplates the termination of non-essential functions associated with certain components for which it is not possible or desirable to operate at reduced voltage or reduced speed.

The power savings techniques described above for type II circuitry 111 of FIG. 1 are also applicable to type II circuitry 211. Similarly, as battery voltage decreases, system timing functions for which power cycling and other power management techniques cannot be used beneficially, are terminated, as are time-critical applications.

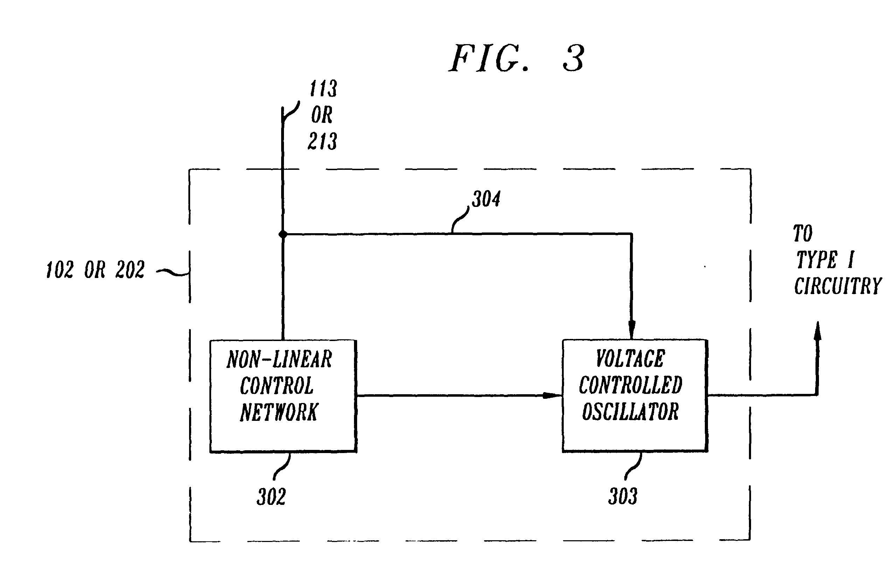

FIG. 3 shows an illustrative arrangement for the variable speed timing source represented in FIGs. 1 and 2. The timing source is comprised of two major components, non-linear control network 302 and voltage controlled oscillator 303. Non-linear control network 302 is a passive circuit comprised of a series of diodes and resistors arranged for its voltage output to be lower or equal to the input voltage received from battery 101 or 201. An exemplary technique to design non-linear control network 302 is disclosed in Paul Chirlian Electronic Circuits: Physical Principles, Analysis and Design, chap. 7, pp. 383-387, McGraw Hill Inc., New York, 1971. One of the distinctive features offered by non-linear control network 302 is the flexibility to arrange the diodes and the resistors, such that a desired voltage output can be obtained based on some voltage input received from battery 101 (201). For example, non-linear control network 302 can be adapted to allow a decrease of twenty percent (20%) in the standard voltage input of battery 101 or 201 to cause a reduction in the voltage output of non-linear network control 302 by fifty percent (50%). The voltage output of non-linear network control 302 is fed into the control lead of voltage-controlled oscillator 303 which also has a power lead from which it receives power directly from battery 101 or 201 via power line 304. Voltage controlled oscillator 303 generates a square wave whose frequency is a function of the voltage received on its control lead from non-linear control network 302. The square wave signals generated by voltage-controlled oscillator 303 are passed to type I circuitry 105 or 203. Voltage-controlled oscillator 303 may be implemented using, for example, a Texas Instrument 4044 oscillator.

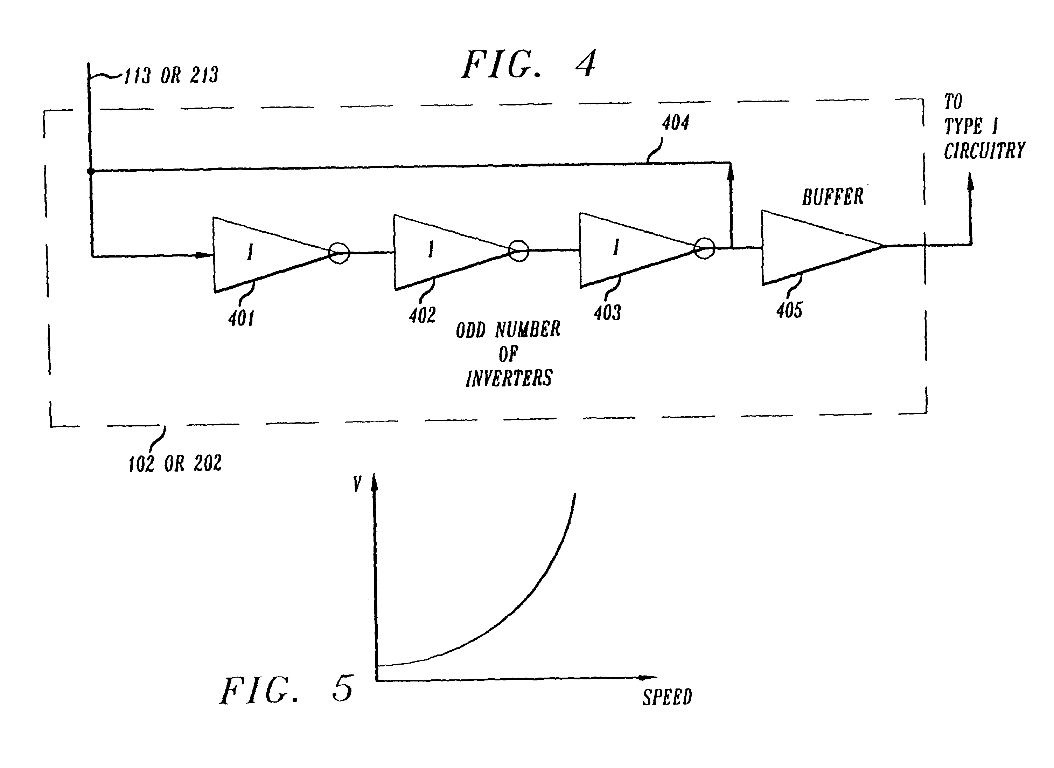

FIG. 4 illustrates an alternative arrangement for variable speed timing source 102 or 202. The illustrative circuit represented in FIG. 4 for variable speed timing source 102 or 202 is formed by electrically connecting in a serial arrangement three CMOS-based inverters 401, 402 and 403 and a buffer 405. While FIG. 4 displays only three inverters for illustrative purposes, it is to be understood that any odd number (no less than three) of CMOS-based inverters, such as 4069 inverters from RCA Corporation, can be used for a variable speed timing source circuit. As its name indicates, the function of an inverter is to change or invert a received signal (a "1" input to a "0" output or a "0" input to a "1" output). The "1" input may represent, for example, a predetermined voltage level received from a power source such as battery 101 of FIG. 1 (or 201 of FIG. 2). The selection of an odd number of inverters and the feedback loop formed by cable 404 connecting the last inverter 403 to the first inverter 401 operate to provide a frequency output that is fed to buffer 405. It is well known by persons skilled in the art that the propagation delay in CMOS-based inverters increases with decreasing power supply voltage. Thus, the propagation delay for the entire circuit increases as the voltage of the power source (battery 101 or 201) decreases, resulting in a lower frequency for the variable timing source as depicted by the graph of FIG. 5. Buffer 405 is a CMOS-based inverter, such as a CMOS 4069 inverter, whose role in the circuit is to convert the received sine waves generated by the connected inverters 401, 402 and 403 to logic signals or clock pulses to be forwarded to type I circuitry 105 of FIG. 1 or 203 of FIG. 2. Because buffer 405 does not have a feedback path, it is able to generate square waves, as opposed to sine waves generated by inverters 401, 402 and 403 connected by feedback loop 404.

It is worth noting that the variable speed timing source of FIG. 4 is perhaps the simplest disclosed arrangement to realize the advantages of this invention. However, the variable speed timing source illustrated in FIG. 3 offers circuit and system designers the ability to manage the "power consumption versus system performance" tradeoff to meet the particular demands and operational characteristics of their particular circuit or application.

The above description is to be construed only as an illustrative embodiment of this invention. Persons skilled in the art can easily conceive of alternative arrangements providing functionality similar to my invention without any deviation from the fundamental principles or the scope of this invention.

## Claims

1. An electronic device adapted to be powered by a variable voltage source (101), the electronic device comprising a first group of components (105) arranged to be driven by a first common clock (112), the first group of components (105) being designed to operate in a range of frequencies of the first common clock (112), and the first group of components (105) consuming power at a rate dependent on the frequency of the first common clock (112), and a second group of components (111) arranged to be driven by a second common clock (110), the electronic device being **characterised by**:
a variable frequency timing source (102, 103) for receiving power from the variable voltage source (101) and for generating a first timing signal for driving the first common clock (112), the first timing signal having a frequency varying with the voltage of the variable voltage source (101) so that the rate at which the first group of components (105) consumes power decreases when the voltage of the variable voltage source (101) decreases; and
a second timing source (109) for generating a second constant speed timing signal for driving the second common clock (110).

2. An electronic device as claimed in claim 1, comprising means for cycling power on and off to the second group of components (111) in response to the voltage of the variable voltage source (101) falling below a first predetermined threshold.

3. An electronic device as claimed in claim 1, comprising means for removing power from selected components of the second group of components (111) in response to the voltage of the variable voltage source (101) falling below a first predetermined threshold.

4. An electronic device as claimed in claim 1, comprising means for stabilizing voltages (104), the means for stabilizing voltages (104) being arranged to receive power from the variable voltage source (101) and provide stabilized voltage power (106, 108) to the second group of components (111) and the second timing source (109).

5. An electronic device as claimed in claim 1, comprising means for stabilizing voltages (104), the means for stabilizing voltages (104) being arranged to receive power from the variable voltage source (101) and provide stabilized voltage power to the first group of components (105), the second group of components (111), and the second timing source (109).

6. An electronic device as claimed in claim 1, wherein the variable frequency timing source (102, 103) comprises a voltage controlled oscillator (303), and a non-linear control network (302) for receiving the voltage of the variable voltage source (101) and providing a control signal dependent on the voltage of the variable voltage source (101) to the oscillator (303).

7. An electronic device as claimed in claim 1, wherein the variable frequency timing source (102) comprises an odd number of CMOS inverters connected in series (401, 402, 403), and a buffer (405), the inverters comprising a first inverter (401) and a last inverter (403), each inverter having an input and an output, the buffer (405) having an input and an output, and the output of the last inverter (403) being for driving the input of the first inverter (401) and the input of the buffer (405), the first timing signal for driving the first common clock (112) appearing at the output of the buffer (405).

## Patentansprüche

1. Zur Bestromung durch eine variable Spannungsquelle (101) geeignete elektronische Vorrichtung mit einer ersten Gruppe von Bauteilen (105), die zur Ansteuerung durch einen ersten gemeinsamen Takt (112) angeordnet sind, wobei die erste Gruppe von Bauteilen (105) dazu ausgelegt ist, in einem Bereich von Frequenzen des ersten gemeinsamen Takts (112) zu arbeiten und die erste Gruppe von Bauteilen (105) Strom mit einer von der Frequenz des ersten gemeinsamen Takts (112) abhängigen Rate verbraucht, und einer zweiten Gruppe von Bauteilen (111), die zur Ansteuerung durch einen zweiten gemeinsamen Takt (110) angeordnet sind, **gekennzeichnet durch**:
einen Taktgeber mit variabler Frequenz (102, 103) zum Empfangen von Strom von der variablen Spannungsquelle (101) und zum Erzeugen eines ersten Taktsignals zum Ansteuern des ersten gemeinsamen Takts (112), wobei das erste Taktsignal eine Frequenz aufweist, die mit der Spannung der variablen Spannungsquelle (101) variiert, so daß die Rate, mit der die erste Gruppe von Bauteilen (105) Strom verbraucht, abnimmt, wenn die Spannung der variablen Spannungsquelle (101) abnimmt; und
einen zweiten Taktgeber (109) zum Erzeugen eines zweiten Taktsignals konstanter Geschwindigkeit zum Ansteuern des zweiten gemeinsamen Takts (110).

2. Elektronische Vorrichtung nach Anspruch 1 mit Mitteln zum zyklischen Ein- und Ausschalten von Strom zur zweiten Gruppe von Bauteilen (111) als Reaktion auf das Fallen der Spannung der variablen Spannungsquelle (101) unter einen ersten vorbestimmten Schwellwert.

3. Elektronische Vorrichtung nach Anspruch 1 mit Mitteln zum Entfernen von Strom von ausgewählten Bauteilen der zweiten Gruppe von Bauteilen (111) als Reaktion auf das Fallen der Spannung der variablen Spannungsquelle (101) unter einen ersten vorbestimmten Schwellwert.

4. Elektronische Vorrichtung nach Anspruch 1 mit Mitteln zum Stabilisieren von Spannungen (104), wobei das Mittel zum Stabilisieren von Spannungen (104) zum Empfangen von Strom von der variablen Spannungsquelle (101) und zum Bereitstellen von Strom mit stabilisierter Spannung (106, 108) für die zweite Gruppe von Bauteilen (111) und den zweiten Taktgeber (109) angeordnet ist.

5. Elektronische Vorrichtung nach Anspruch 1 mit Mitteln zum Stabilisieren von Spannungen (104), wobei das Mittel zum Stabilisieren von Spannungen (104) zum Empfangen von Strom von der variablen Spannungsquelle (101) und zum Bereitstellen von Strom mit stabilisierter Spannung für die erste Gruppe von Bauteilen (105), die zweite Gruppe von Bauteilen (111) und den zweiten Taktgeber (109) angeordnet ist.

6. Elektronische Vorrichtung nach Anspruch 1, wobei der Taktgeber mit variabler Frequenz (102, 103) einen spannungsgesteuerten Oszillator (303) und ein nichtlineares Steuernetzwerk (302) zum Empfangen der Spannung der variablen Spannungsquelle (101) und zum Bereitstellen eines von der Spannung der variablen Spannungsquelle (101) abhängigen Steuersignals für den Oszillator (303) umfaßt.

7. Elektronische Vorrichtung nach Anspruch 1, wobei der Taktgeber mit variabler Frequenz (102) eine ungerade Anzahl von in Reihe geschalteten CMOS-Invertern (401, 402, 403) und einen Pufferspeicher (405) umfaßt, wobei die Inverter einen ersten Inverter (401) und einen letzten Inverter (403) umfassen, wobei jeder Inverter einen Eingang und einen Ausgang aufweist, der Pufferspeicher (405) einen Eingang und einen Ausgang aufweist und der Ausgang des letzten Inverters (403) zum Ansteuern des Eingangs des ersten Inverters (401) und des Eingangs des Pufferspeichers (405) bestimmt ist, wobei das erste Taktsignal zum Ansteuern des ersten gemeinsamen Takts (112) am Ausgang des Pufferspeichers (405) erscheint.

## Revendications

1. Dispositif électronique adapté pour être alimenté par une source de tension variable (101), le dispositif électronique comprenant un premier groupe de composants (105) aménagé pour être piloté par une première horloge commune (112), le premier groupe de composants (105) étant conçu pour fonctionner dans une gamme de fréquences de la première horloge commune (112), et le premier groupe de composants (105) consommant de l'énergie à un taux dépendant de la fréquence de la première horloge commune (112), et un deuxième groupe de composants (111) aménagé pour être piloté pour une deuxième horloge commune (110), le dispositif électronique étant **caractérisé par** :
une source de cadencement à fréquence variable (102, 103) destinée à recevoir de l'énergie provenant de la source de tension variable (101) et à générer un premier signal de cadencement pour piloter la première horloge commune (112), le premier signal de cadencement présentant une fréquence variant avec la tension de la source de tension variable (101) de sorte que le taux de consommation d'énergie du premier groupe de composants (105) diminue lorsque la tension de la source de tension variable (101) diminue ; et
une deuxième source de cadencement (109) destinée à générer un deuxième signal de cadencement à vitesse constante pour piloter la deuxième horloge commune (110).

2. Dispositif électronique selon la revendication 1, comprenant un moyen pour bloquer et débloquer alternativement l'alimentation du deuxième groupe de composants (111) en réponse à la chute de la tension de la source de tension variable (101) en dessous d'un premier seuil prédéterminé.

3. Dispositif électronique selon la revendication 1, comprenant un moyen pour couper l'alimentation de composants sélectionnés du deuxième groupe de composants (111) en réponse à la chute de la tension de la source de tension variable (101) en dessous d'un premier seuil prédéterminé.

4. Dispositif électronique selon la revendication 1, comprenant un moyen destiné à stabiliser les tensions (104), le moyen destiné à stabiliser les tensions (104) étant aménagé pour recevoir de l'énergie en provenance de la source de tension variable (101) et fournir une alimentation à tension stabilisée (106, 108) au deuxième groupe de composants (111) et à la deuxième source de cadencement (109).

5. Dispositif électronique selon la revendication 1, comprenant un moyen destiné à stabiliser les tensions (104), le moyen destiné à stabiliser les tensions (104) étant aménagé pour recevoir de l'énergie en provenance de la source de tension variable (101) et fournir une alimentation à tension stabilisée au premier groupe de composants (105), au deuxième groupe de composants (111) et à la deuxième source de cadencement (109).

6. Dispositif électronique selon la revendication 1, dans lequel la source de cadencement à fréquence variable (102, 103) comprend un oscillateur commandé en tension (303), et un réseau de pilotage non linéaire (302) destiné à recevoir la tension de la source de tension variable (101) et à fournir un signal de régulation dépendant de la tension de la source de tension variable (101) appliquée à l'oscillateur (303).

7. Dispositif électronique selon la revendication 1, dans lequel la source de cadencement à fréquence variable (102) comprend un nombre impair d'inverseurs CMOS montés en série (401, 402, 403), et un tampon (405), les inverseurs comprenant un premier inverseur (401) et un dernier inverseur (403), chaque inverseur possédant une entrée et une sortie, le tampon (405) possédant une entrée et une sortie, et la sortie du dernière inverseur (403) servant à piloter l'entrée du premier inverseur (401) et l'entrée du tampon (405), le premier signal de cadencement servant à piloter la première horloge commune (112) apparaissant à la sortie du tampon (405).
